# EUROPÄISCHE PATENTSCHRIFT

(11) **EP 1 646 771 B1**
(45) Veröffentlichungstag und Bekanntmachung des Hinweises auf die Patenterteilung: **12.09.2012**
(21) Anmeldenummer: 04740833.1
(22) Anmeldetag: 09.07.2004
(51) Int. Cl.: F01P 3/20, B60T 1/087, F16D 57/04

(54) **KRAFTFAHRZEUGK HLMITTELKREISLAUF MIT PUMPE UND RETARDER**
MOTOR VEHICLE COOLANT CIRCUIT COMPRISING A PUMP AND A RETARDER
CIRCUIT DE REFROIDISSEMENT DE VEHICULE AUTOMOBILE COMPRENANT UNE POMPE ET UN RALENTISSEUR

(30) Priorität: 19.07.2003 DE 10332907
(43) Veröffentlichungstag der Anmeldung: 19.04.2006
(73) Patentinhaber: Voith Turbo GmbH & Co. KG, 89522 Heidenheim (DE)
(72) Erfinder: VOGELSANG, Klaus, 74564 Crailsheim (DE)
(74) Vertreter: Dr. Weitzel & Partner
(86) Internationale Anmeldenummer: PCT/EP2004/007546
(87) Internationale Veröffentlichungsnummer: WO 2005/014985

(56) Entgegenhaltungen:
- EP-A- 0 794 326
- DE-A- 3 831 596
- US-A- 2 287 130
- US-A- 3 367 461

## Beschreibung

Die Erfindung betrifft einen Kühlmittelkreislauf eines Kraftfahrzeugs, welcher sowohl eine Kühlmittelpumpe als auch einen Retarder umfasst, wobei das Arbeitsmedium des Retarders das Kühlmittel ist.

Herkömmlich wurde als Arbeitsmedium eines Retarders im Antriebsstrang eines Kraftfahrzeugs ein Hydrauliköl verwendet. Aufgrund der im Bremsbetrieb entstehenden Wärme musste das Hydrauliköl gekühlt werden. Dazu war in der Regel ein Öl-Wasser-Wärmetauscher als Schnittstelle zwischen Kühlkreislauf und Retarderarbeitsmediumkreislauf vorgesehen, über welchen die notwendige Wärmemenge aus dem Retarderkreislauf in den Kühlkreislauf des Fahrzeugs abgeführt wurde.

In jüngerer Zeit sind auch Retarder bekannt geworden, die unmittelbar im herkömmlichen Kühlmittelkreislauf des Fahrzeugs angeordnet sind und deren Arbeitsmedium das Kühlmedium des Kühlkreislaufs ist. Durch das Vorsehen solcher Retarder im Kühlkreislauf kann der Gesamtströmungswiderstand beziehungsweise der Durchflusswiderstand des Kühlmittels im Kühlkreislauf erhöht werden.

Eines solche Gesamtströmungswiderstandserhöhung findet in erheblichem Ausmaß auch bei sogenannten Ölretardern aufgrund der zusätzlichen Bauteile im Kühlmittelkreislauf, beispielsweise des Öl-Wasser-Wärmetauschers, statt. Diese Strömungswiderständserhöhung hat Nachteile. Entsprechend kann keine herkömmlich dimensionierte Kühlmittelpumpe eingesetzt werden, wie sie bei Kühlkreisläufen ohne Retarder Verwendung findet, sondern eine leistungsstärkere Kühlmittelpumpe muss verwendet werden.

Der Antrieb der leistungsstärkeren Kühlmittelpumpe erfordert mehr Energie, was zu erhöhtem Kraftstoffverbrauch des Kraftfahrzeugs führt. Dies fällt besonders dadurch ins Gewicht, dass diese erhöhte Leistungsaufnahme der Kühlmittelpumpe auch dann vorliegt, wenn der Retarder überhaupt nicht eingeschaltet ist, beispielsweise wenn er entleert ist. Der Retarder ist aber in der Regel nur zu einem relativ geringen Zeitraum gegenüber dem normalen Fahrbetrieb (ohne Bremsung des Fahrzeugs mit dem Retarder) eingesetzt. Schließlich bedeutet eine leistungsstärkere Kühlmiftelpumpe ein zusätzliches Fahrzeuggewicht, was ebenfalls zu einem erhöhten Kraftstoffverbrauch führt.

US 2 287 130 beschreibt eine hydrodynamische Bremse mit einem in Strömungsrichtung vorgeschalteten 3-Wegeventil zum Öffnen und Schlieβen eines Strömungsweges zur hydrodynamischen Bremse. EP 0 794 326 A1 beschreibt einen Retarder in einem kombinierten Kühl- und Bremskreislauf. Auch das Dokument US3367461 offenbart eine hydrodynamische Bremse.

Der Erfindung liegt dia Aufgabe zugrunde, einen Kühlmittelkreislauf mit einer Kühlmittelpumpe und einem Retarder darzustellen, der gegenüber dem Stand der Technik verbessert ist. Insbesondere soll eine Kühlmittelpumpe verwendet werden können, weiche keine stärkere Leistungsaufnahme beziehungsweise Leistungsabgabe als Kühlmittelpumpen in Kühlkreisläufen ohne Retarder erfordert.

Die erfindungsgemäße Aufgabe wird durch die Merkmale des Anspruchs 1 gelöst. Die Unteransprüche beschreiben besonders vorteilhafte Ausführungen.

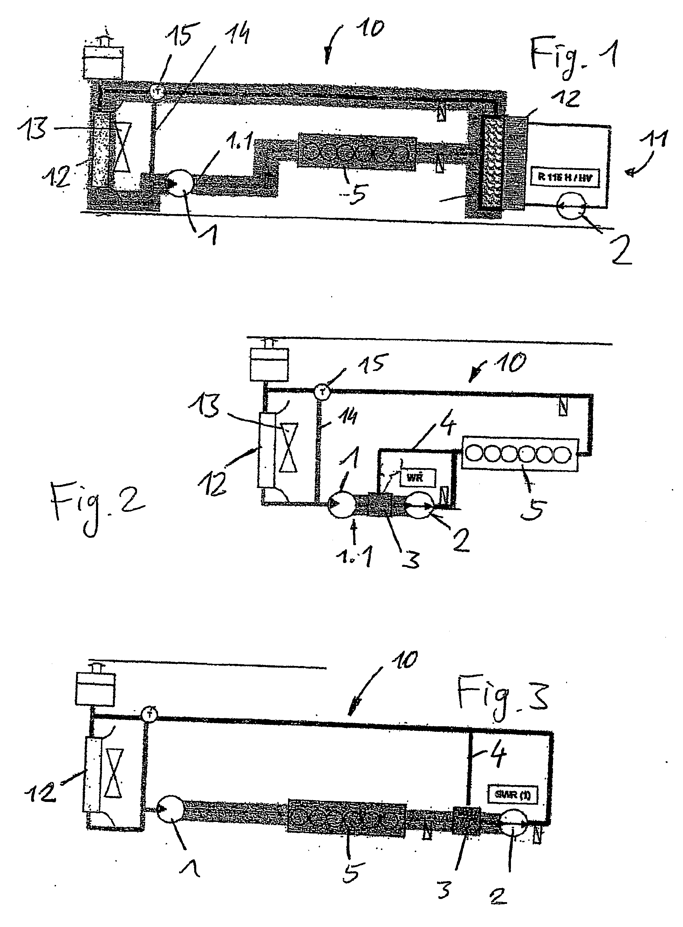

Die Erfindung und ihre Vorteile gegenüber dem Stand der Technik werden nachfolgend anhand der Figuren erläutert, wobei die Figur 1 einen Kühlmittelkreislauf gemäß des Standes der Technik darstellt und die Figuren 2 bis 11 vorteilhafte Ausführungen beziehungsweise Details von vorteilhaften Ausführungen erfindungsgemäßer Kühlmittelkreisläufe zeigen.

Im Einzelnen zieigen ;
- Figur 1: eine schematische Darstellung eines Kraftfahrzeugskühlkreislaufes mit einem getrennt angeordneten Retarderarbeitsmediumkreislauf mit einem Ölretarder;
- Figur 2: eine erste Ausführung eines erfindungsgemäßen Kühlmittelkreislaufs;
- Figur 3: eine zweite Ausführung eines erfindungsgemäßen Kühlmittelkreislaufs;
- Figur 4: eine dritte Ausführung eines erfindungsgemäßen Kühlmittelkreislaufs;
- Fig. 5a, 5b: eine geschnittene Darstellung durch ein Umschaltventil;
- Figur 6: eine abgewickelte Darstellung des Stators eines Retarders;
- Figur 7: eine vorteilhafte Ausgestaltung von Bohrungen in Retarderfüllschaufeln;
- Figur 8: eine weitere Ausgestaltung der Bohrung in einer Retarderfüllschaufel;
- Figur 9: eine dritte mögliche Ausgestaltung der Bohrungen in einer Retarderfüllschaufel;
- Figur 10: eine vierte mögliche Ausgestaltung von Bohrungen in einer Retarderfüllschaufel;
- Figur 11: eine fünfte mögliche Ausgestaltung der Bohrungen in einer Retarderfüllschaufel.

In der Figur 1 erkennt man einen Kühlmittelkreislauf 10 und einen Retarderarbeitsmediumkreislauf 11. Gemäß des Standes der Technik sind beide Kreisläufe getrennt ausgeführt. Das Kühlmittel im Kühlmittelkreislauf 10 wird mittels der Kühlmittelpumpe 1 umgewälzt und das Arbeitsmedium im Retarderkreislauf 11 mittels des Retarders 2. Beide Kreisläufe sind mittels eines Öl-Wasser-Wärmetauschers 12 miteinander derart verschaltet, dass die im Retarder 2 erzeugte Wärme auf den Kühlmittelkreislauf 10 übertragen wird. Aus dem Kühlmittelkreislauf 10 wird die Wärme herkömmlich mittels eines Kühlers 12 zusammen mit dem Gebläserad 13 abgeführt. Sofern aufgrund der Kühlmitteltemperatur keine Notwendigkeit besteht, die Wärme aus dem Kühlmittelkreislauf 10 abzuführen, wird das Kühlmittel mittels des Bypasses 14 am Kühler vorbeigeleitet. Für eine entsprechende Regelung ist ein Thermostat 15 vorgesehen.

Von der Pumpe 1 wird der zum Energietransport notwendige Kühlmediumstrom, insbesondere Kühlwasserstrom, über den Motor 5, den wasserführenden Teil des Öl-Wasser-Wärmetauschers 12, über das Thermostat 15 und über den Wasser-Luft-Kühler 12 zur Saugseite der Pumpe 1 bewegt. Bei diesem Umlauf sind von der Pumpe 1 die im Kreislauf gegebenen Strömungswiderstände zu überwinden, das heißt, die Pumpe muss so viel Leistung aufnehmen bzw. abgeben, dass der Druck des Arbeitsmediums aufgrund des durch die Pumpe erzeugten Druckniveaus am Pumpenausgang 1.1 so weit über dem saugseitigen . Druckniveau liegt, dass sich eine entsprechende Kreislaufströmung durch den gesamten Kühlmittelkreislauf einstellt.

Zusätzliche Widerstände im Kühlmittelkreislauf senken und behindern den umlaufenden Kühlwasserstrom und damit die effektiv übertragbare Wärmemenge oder benötigen bei gleichem Kühlwasserstrom eine stärkere Pumpe mit dem Ergebnis einer erhöhten Leistungsaufnahme. Eine solche erhöhte Leistungsaufnahme führt zu einem vermehrten Kraftstoffverbrauch, was unerwünscht ist.

Einen solchen zusätzlichen Widerstand stellt beispielsweise der Öl-Wasser-Wärmetauscher 12 dar. Wenn man bedenkt, dass der Retarder nur während ca. 10 Prozent des Fahrzeugeinsatzes zum Bremsen notwendig ist, bedeuten die restlichen 90 Prozent des Fahrzeugeinsatzes einen Pumpenbetrieb mit unnötig hoher Leistungsaufnahme.

Die Figur 2 zeigt einen erfindungsgemäß ausgebildeten Kühlmittelkreislauf. Die entsprechenden Elemente sind dabei mit denselben Bezugszeichen wie in der Figur 1 gekennzeichnet.

Wie man sieht, ist der Retarder 2 unmittelbar im Kühlmittelkreislauf angeordnet und-durch die Bypassstrecke 4 umgehbar. In Strömungsrichtung vor dem Retarder 2 ist zum Steuern der Strömung - entweder durch den Retarder 2 oder durch den Bypass 4 - ein Umschaltventil 3 angeordnet.

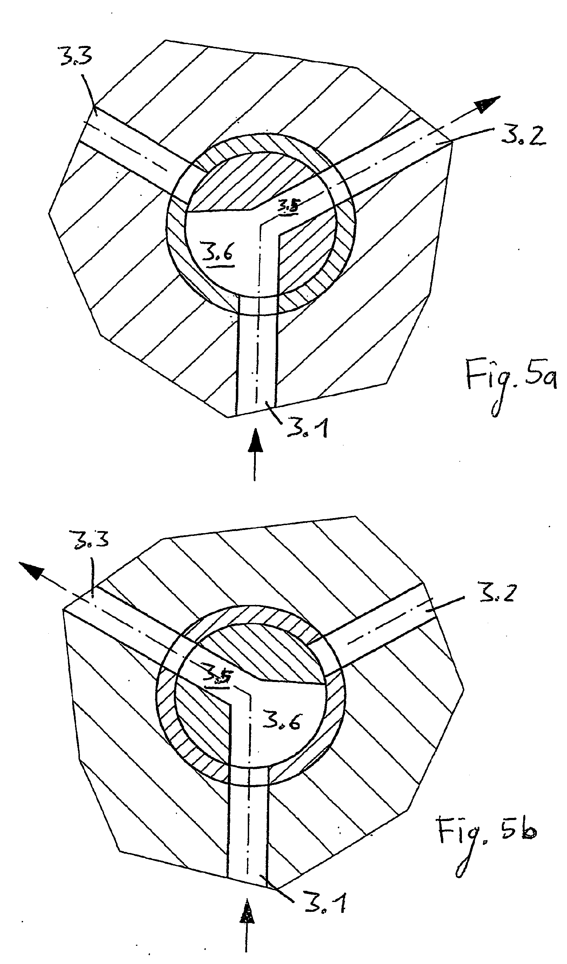

Die vor dem Umschaltventil 3 angeordnete Kühlmittelpumpe 1 entspricht in ihrem Leistungsbereich einer Kühlmittelpumpe eines Kühlmittelkreislaufs ohne direkt eingebrachten Retarder oder ohne eingebrachten Öl-Wasser-Wärmetauscher für einen separaten Retarderkreislauf, wie er in der Figur 1 dargestellt ist. Im Nichtbremsbetrieb (bezogen auf den Retarder) wälzt die Kühlmittelpumpe 1 das Kühlmittel im Kühlmittelkreislauf 10 um, und zwar beginnend mit dem Druckniveau des Kühlmittelauslasses 1.1 der Pumpe 1, über das Umschaltventil 3, den Bypass 4, den Motor 5, das Thermostat 15, den Kühler 12 (oder gegebenenfalls zumindest teilweise über den Bypass 14 an diesem vorbei) zur Saugseite der Pumpe 1. Obwohl ein Retarder in den Kühlmittelkreislauf zuschaltbar ist, muss somit kein zusätzlicher Strömungswiderstand überwunden werden. Dazu ist besonders vorteilhaft das Umschaltventil 3 derart ausgestaltet, dass es keine zusätzliche Behinderung des Strömungskreislaufes darstellt. Eine besonders vorteilhafte Ausführung eines solchen Umschaltventils ist in der Figur 5 dargestellt und wird nachfolgend noch beschrieben.

Im Retarderbremsbetrieb ist der Strömungswiderstand zwischen Pumpenauslass 1.1 und einer Position im Kernring des Retarders 2 derart ausgelegt, dass er unterhalb des zuvor beschriebenen Gesamtströmungswiderstandes des Kühlmittelkreislaufes im Nichtbremsbetrieb liegt. Somit ist die Leistung der Pumpe 1 ausreichend, um einen ausreichenden Überlagerungsdruck für den Retarder 2 zur Verfügung zu stellen, so dass dieser die restliche Pumpenarbeit zur Umwälzung des Kühlmittels im Kühlmittelkreislauf 10 bis hin zur Saugseite der Pumpe 1 übernimmt. Ein Aspekt der dargestellten Ausführung ist somit darin zu sehen, dass die Pumpe 1 nur die Widerstandsstrecke vom Kühlmittelauslass 1.1 der Pumpe bis zum Retarder 2, das heißt genau gesagt bis zum Kenring des Retarders 2, überwindet. Der Strömungswiderstand im restlichen Kühlmittelkreislauf wird vom zugeschalteten Retarder überwunden. Dieses ist leicht möglich, wenn man bedenkt, dass die Kühlmittelpumpe einen Leistungsbereich gegenüber dem Leistungsbereich des Retarders hinsichtlich der möglichen Pumpleistung im Verhältnis von 1:100 aufweist. Beispielsweise weist die Pumpe eine Leistung von ca. 6 Kilowatt und der Retarder einen Leistungsbereich von 500 bis 600 Kilowatt auf.

Dadurch, dass erfindungsgemäß der von der Kühlmittelpumpe 1 zu überwindende Strömungswiderstand im Bremsbetrieb geringer ist als im Nichtbremsbetrieb, stellt sich eine erhöhte Umlaufmenge an Kühlmedium ein. Dies ist gerade im Retarderbremsbetrieb von Vorteil, um die thermische Verfügbarkeit eines derartigen Bremssystems zu erhöhen und damit den möglichen verschleißfreien Bremsbetrieb vergleichsweise zu erweitern, was zur Entlastung von im Fahrzeug vorgesehenen Verschleißbremsen führt. Dadurch, dass der Retarder in Strömungsrichtung vor dem zu kühlenden Motor 5 angeordnet ist, kann einmal der von der Kühlmittelpumpe zu überwindende Strömungswiderstand besonders gering gehalten werden, was den Durchsatz bei gleicher Drehzahl erhöht, und zum anderen weist das Arbeitsmedium im Retarder eine relativ geringe Temperatur auf.

In der Figur 3 ist eine alternative Ausgestaltung eines Kühlmittelkreislaufs 10 gezeigt. Diesmal ist der Motor 5 in Strömungsrichtung gesehen hinter der Kühlmittelpumpe 1 und vor dem Umschaltventil 3 angeordnet. Trotzdem ist erfindungsgemäß der Strömungswiderstand zwischen Kühlmediumauslass 1.1 der Pumpe 1 und Kernring des Retarders 2 derart ausgewählt, dass er kleiner ist als der Gesamtströmungswiderstand im Kühlmittelkreislauf bei abgeschaltetem Retarder 2, das heißt bei Durchströmung des Bypasses 4.

Vorteil dieser Ausführung ist, dass das im Retarder erwärmte Kühlmittel unmittelbar nachfolgend im Fahrzeugkühler 12 gekühlt wird. Bei entsprechender Ausbildung des Retarders können Kühlmitteltemperaturen zugelassen werden, welche oberhalb der zulässigen Kühlmitteleintrittstemperaturen am Motor 5 liegen.

Bei der gezeigten Ausführung gemäß der Figur 2 kann eine besonders kurze kühlmittelführende Strecke zwischen Kühlmittelpumpe 1 und Retarder 2 dann erreicht werden, wenn der Retarder hinsichtlich seiner mechanischen Einbindung in das System als Primärretarder ausgeführt ist. Primärretarder bedeutet, dass der Retarder in Triebverbindung zwischen dem Motor 5 und einem nicht dargestellten Getriebe auf der Getriebeantriebsseite angeordnet ist. Dadurch, dass somit Wasserpumpe und Retarder hinsichtlich des Getriebes beide auf der Motorseite angeordnet sind, ist die kurze Strömungsmittelführung zwischen Pumpe 1 und Retarder 2 und ein entsprechend geringer Strömungswiderstand ausführbar.

Die Anordnung gemäß der Figur 3 bietet neben den genannten Vorteilen den weiteren Vorteil, dass der Retarder 2 besonders leicht als Sekundärretarder ausgeführt werden kann. Sekundärretarder bedeutet, dass der Retarder in einer Triebverbindung auf der Getriebeabtriebsseite angeordnet ist, das heißt zwischen Getriebe und den Fahrzeugrädern. Dies ist günstig, da auf der Getriebeabtriebsseite im Rahmenbereich eines Fahrzeugs mehr Bauraum zur Verfügung steht als im Bereich des Motorraums auf der Getriebeantriebsseite.

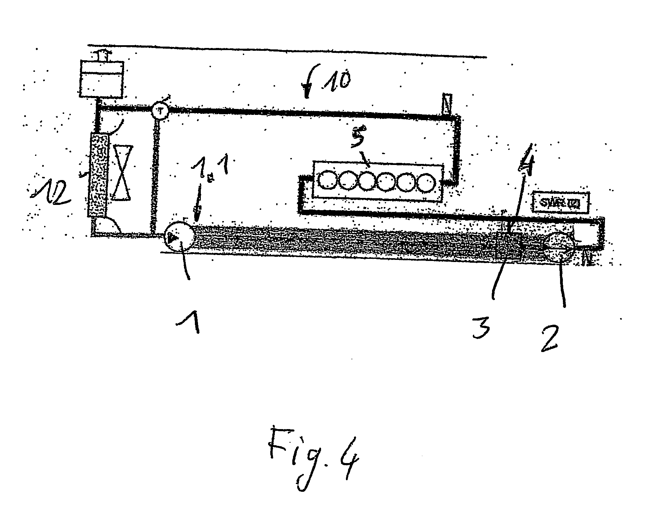

In der Figur 4 ist eine Ausführung dargestellt, bei der der Retarder 2 hinsichtlich seiner mechanischen Wirkungsweise sekundär angeordnet ist, das heißt auf der Getriebeabtriebsseite angeordnet ist, während er in seiner Anordnung im Kühlmittelkreislauf jedoch vor dem Motor 5 angeordnet ist.

Auch in dieser Ausführung ist die Strömungsführung vom Auslass 1.1 der Kühlmittelpumpe 1 bis zum Kernring des Retarders 2 derart gestaltet, dass der Strömungswiderstand dieser Strecke geringer ist als der Strömungswiderstand im Nichtbremsbetrieb des gesamten Kühlmittelkreislaufs 10.

Besonders vorteilhaft kann bei allen gezeigten Ausführungen eine Anpassung des Strömungswiderstandes zwischen Pumpenauslass 1.1 und Kernring des Retarders 2 durch eine vorgegebene Anzahl von Bohrungen im Befüllsystem des Retarders vorgenommen werden. Die Anzahl und/oder Größe der Bohrungen beziehungsweise der jeweiligen Befüllquerschnitte sind vorteilhaft gemäß den jeweiligen Widerstandscharakteristiken des verwendeten Fahrzeugkühlsystems ausgewählt.

Nachfolgend werden einige Ausführungen zur Einstellung eines besonders niedrigen Strömungswiderstands dargelegt.

Die Figuren 5a und 5b zeigen schematisch eine vorteilhafte Ausführung eines Umschaltventils 3. Das gezeigte Umschaltventil 3 ist als Drehschieberventil ausgebildet und weist einen Einlass 3.1, einen ersten Auslass 3.2 und einen zweiten Auslass 3.3 auf. Über den Einlass 3.1 wird Kühlmedium zumindest mittelbar von der Kühlmittelpumpe 1 zugeführt. Über einen Auslass, beispielsweise den Auslass 3.2, wird Kühlmittel in den Bypass 4 um den Retarder herum geleitet und über den anderen Auslass, beispielsweise den Auslass 3.3, zum Retarder 2.

Ferner weist das Umschaltventil 3 einen zylindrischen Ventilkolben 3.4 auf, welcher um seine Längsachse drehbar ist. Der zylindrische Ventilkolben weist Radialbohrungen auf, nämlich eine Auslassbohrung 3.5 und eine Einlassbohrung 3.6. Die Auslassbohrung 3.5 ist beispielsweise zylindrisch ausgeführt, während die Einlassbohrung 3.6 konisch verjüngt beziehungsweise trichterförmig ausgeführt ist. Eine, beide oder mehrere Bohrungen können selbstverständlich in ihrem Querschnitt auch andere Formen aufweisen, beispielsweise die eines Langlochs. Durch Drehen des zylindrischen Ventilkolbens 3.4 um seine Längsachse wird der Einlass 3.1 mit einem der beiden Auslässe 3.2 und 3.3 gezielt verbunden.

Bei der oben beschriebenen Verschaltung der Auslässe 3.2 und 3.3 ist in der Figur 5a der Zustand des Nichtbremsbetrieb des Retarders gezeigt und in der Figur 5b der Zustand des Bremsbetriebs.

Die konisch verjüngte Einlassbohrung 3.6 weist eine derartig dimensionierte Einlassöffnung am Umfang des Ventilkolbens 3.4 auf, das ungeachtet der Stellung des Ventilkolbens 3.4 - das heißt ungeachtet dessen, ob dieser den Einlass 3.1 mit dem Auslass 3.2 strömungsleitend verbindet oder den Einlass 3.1 mit dem Auslass 3.3 - die Einlassöffnung der Einlassbohrung 3.6 den Strömungsquerschnitt des Einlasses 3.1 vollständig umschließt.

Durch die gezeigte Gestaltung des Drehschiebers wird eine äußerst strömungsgünstige und widerstandsarme Lösung erreicht.

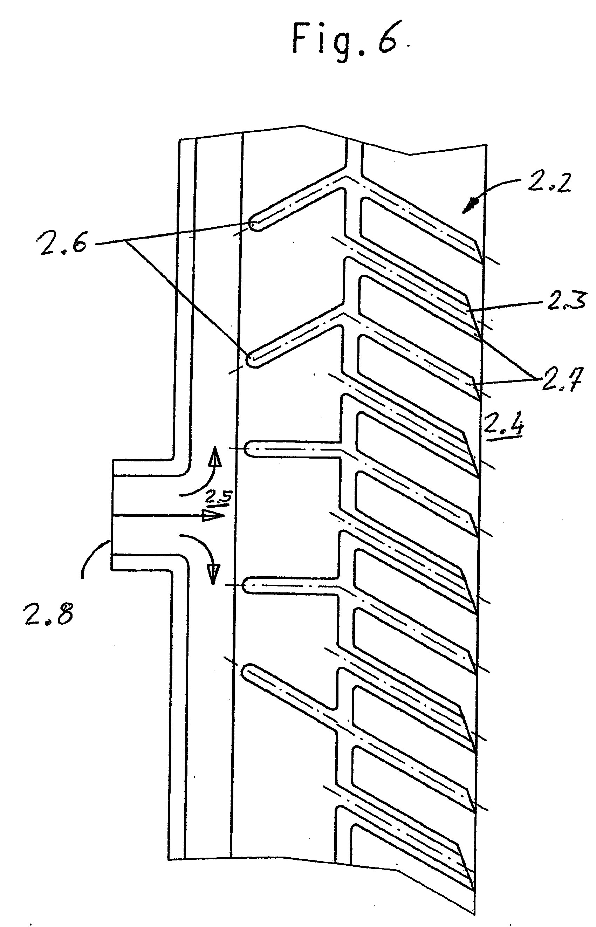

Die Figur 6 zeigt einen hinsichtlich einer widerstandsarmen Strömung in den Retarderkernringbereich vorteilhaft ausgestalteten Retardereintrittsbereich. Dabei ist ein Teilbereich des Stators 2.2 des Retarders 2 in einer abgewickelten Darstellung gezeigt.

Der Stator 2.2 weist eine Vielzahl von Statorschaufeln 2.7 auf. Eine vorbestimmte Anzahl von Statorschaufeln 2.7 sind mit einer Bohrung 2.3 zum Zuführen von Arbeitsmedium in den Arbeitsraum des Retarders 2.4 versehen. In der gezeigten Ausführung weist jede zweite Statorschaufel 2.7 eine solche Bohrung 2.3 auf. In einem Extremfall würde jede Statorschaufel eine entsprechende Bohrung aufweisen. Statorschaufeln mit Bohrungen werden auch als Füllschaufeln bezeichnet.

Der Eintritt in den Retarderkernringbereich entspricht dem Statoraustritt, das heißt dem Austritt des Arbeitsmediums aus den Bohrungen 2.3 in den Füllschaufeln.

Auf der Arbeitsmediumeintrittsseite 2.5 strömt das Arbeitsmedium über eine Zentralbohrung 2.8 über den gesamten Umfang des Stators 2.2. Um eine besonders gleichmäßige Verteilung des Zulaufstroms über den gesamten Umfang zu erreichen, sind auf der Statoreintrittsseite eine Anzahl von Leitelementen 2.6, insbesondere in Form von Rippen, vorgesehen.

Durch die gleichmäßige Verteilung des durch die Zentralbohrung 2.8 eintretenden Arbeitsmediums über den gesamten Statorumfang und damit gleichmäßig auf alle Füllschaufeln, insbesondere auf jede oder jede zweite Statorschaufel, wird eine besonders widerstandsarme Strömung bis zum Kernring des Retarders, das heißt bis zum Statoraustritt, erreicht.

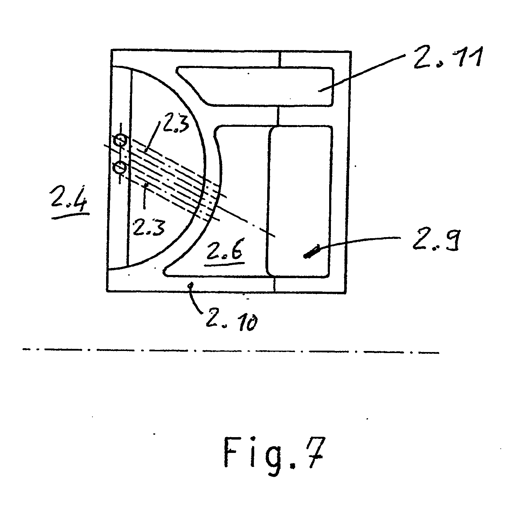

Die Figur 7 zeigt eine weitere Maßnahme zur strömungsgünstigen Gestaltung des Retardereintrittsbereiches. Dabei sind in jeder Füllschaufel, d.h. insbesondere in jeder oder jeder zweiten Schaufel, des Stators zwei parallele Bohrungen 2.3 zum Zuführen von Arbeitsmedium in den Arbeitsraum des Retarders eingebracht. Ferner erkennt man den Einlasskanal 2.9 im Statorgehäuse 2.10, welcher als Ringkanal ausgebildet ist (siehe die angedeutete strichpunktierte Mittellinie). Innerhalb des Einlasskanales 2.9 ist der Stator auf seiner Eintrittsseite mit Leitelementen 2.6 versehen.

Es ist jedoch nicht notwendig, den Ringkanal rotationssymmetrisch gegenüber der Mittellinie auszuführen, auch abweichende Formen, beispielsweise begründet durch den am Getriebe zur Verfügung stehenden Bauraum, können ausgeführt werden.

Radial außerhalb des als Ringkanal ausgebildeten Einlasskanals 2.9 ist ein ebenfalls als Ringkanal ausgebildeter Auslasskanal 2.11 im Statorgehäuse 2.10 vorgesehen, um Arbeitsmedium aus dem Retarderarbeitsraum über einen Retarderauslass abzuführen.

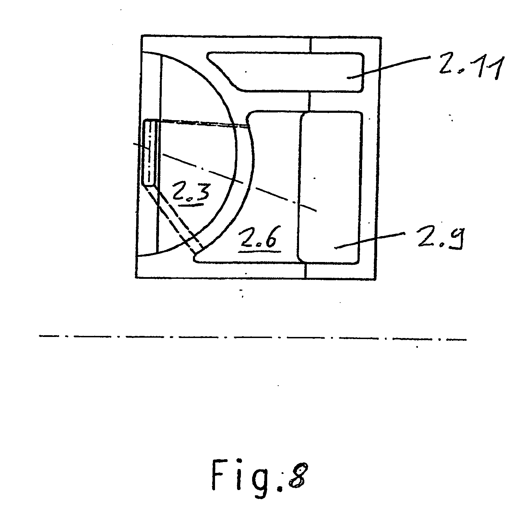

Die Figuren 8 bis 11 zeigen weitere strömungswiderstandsmindernde Maßnahmen im Bereich der Füllschaufeln. So sind gemäß der Figur 8 die Bohrungen 2.3 in den Füllschaufeln des Stators als konisch verjüngter Kanal ausgeführt, dessen Eintrittsöffnung sich im Bereich des Leitelementes 2.6 nahezu über die gesamte Höhe des Einlasskanals 2.9 erstreckt und im Bereich der Statoraustrittsseite die Form eines Langlochs oder eines Rechtecks aufweist.

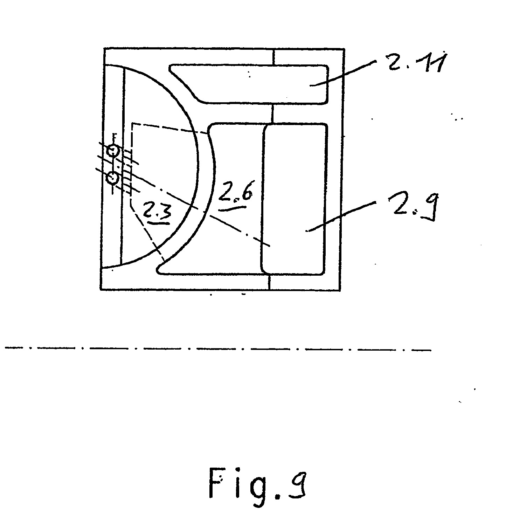

Die Figur 9 zeigt eine Kombination eines konisch verjüngten Eintrittskanals mit zwei Bohrungen, wobei der Eintrittskanal in die zwei Bohrungen übergeht.

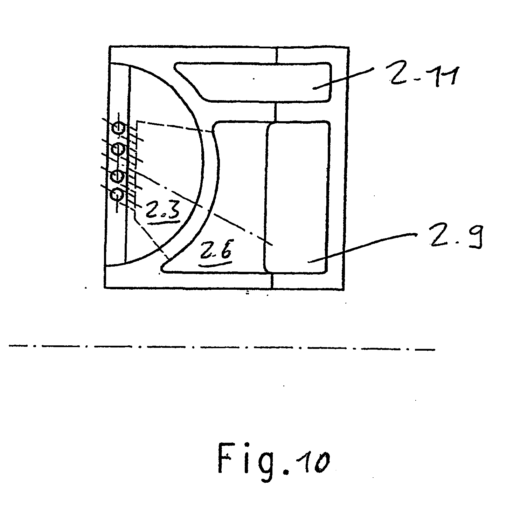

Die Figur 10 zeigt einen Eintrittskanal, welcher in vier Statorschaufelbohrungen übergeht.

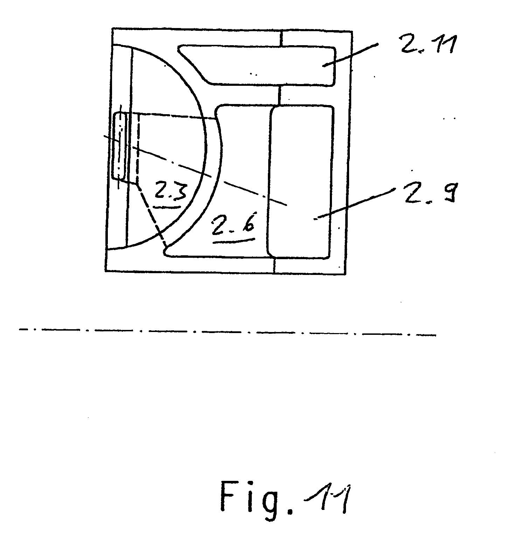

Schließlich zeigt die Figur 11 einen zunächst konisch verjüngten Kanal in der Statorschaufel, welcher dann in Strömungsrichtung gesehen in einen Kanal mit konstantem Querschnitt übergeht.

## Patentansprüche

1. Kühlmittelkreislauf eines Kraftfahrzeugs, umfassend
1.1 ein Kühlmittel;
1.2 eine Kühlmittelpumpe (1) mit einem Kühlmittelauslass (1.1);
1.3 einen Retarder (2), der einen Stator (2.2) und einen Kernring aufweist und dessen Arbeitsmedium das Kühlmittel ist, wobei der Kernring dem Teil des Arbeitsraums (2.4) des Retarders (2) entspricht, welcher in Strömungsrichtung des Kühlmittels hinter einem kühlmittelführenden Retardereintrittsbereich angeordnet ist;
1.4 ein Umschaltventil (3) in Strömungsrichtung vor dem Retarder (2) und eine Bypassstrecke (4) zur Umgehung des Retarders (2), so dass der Retarder (2) hinsichtlich des Kühlmittelkreislaufs zu- und abschaltbar ist; wobei
1.5 die Kühlmittelpumpe (1) in Strömungsrichtung derart vor dem Retarder (2) angeordnet ist, dass sie bei zugeschaltetem Retarder (2) Kühlmittel in den Retarder (2) pumpt und bei abgeschaltetem Retarder (2) Kühlmittel durch die Bypassstrecke (4) am Retarder (2) vorbeipumpt, und wobei
1.6 der Gesamtströmungswiderstand vom Auslass (1.1) der Kühlmittelpumpe (1) bis zum Kernring des Retarders (2) bei zugeschaltetem Retarder geringer ist als der von der Kühlmittelpumpe (1) zu überwindende Summendurchflusswiderstand des Kühlmittelkreislaufs im Nichtbremsbetrieb, indem
1.6.1 die Kühlmittelpumpe (1) das Umschaltventil (3) und der Retarder (2) in der genannten Reihenfolge im Kühlmittelkreislauf bei zugeschaltetem Retarder in Strömungsrichtung unmittelbar hintereinander angeordnet sind, und/oder
1.6.2 der Stator (2.2) des Retarders (2) Bohrungen (2.3) zum Zuführen von Arbeitsmedium in den Arbeitsraum (2.4) des Retarders (2) aufweist und auf seiner Arbeitsmediumeintrittsseite (2.5) über seinen gesamten Umfang mit Rippen (2.6) zur gleichmäßigen Verteilung des Arbeitsmediums über den Statorumfang versehen ist; und/oder
1.6.3 der Stator (2.2) des Retarders (2) Bohrungen (2.3) zum Zuführen des Arbeitsmediums in den Arbeitsraum (2.4) des Retarders (2) aufweist, wobei die Bohrungen (2.3) in Strömungsrichtung konisch verjüngt sind, und/oder
1.6.4 der Stator (2.2) des Retarders (2) Bohrungen (2.3) zum Zuführen des Arbeitsmediums In den Arbeitsraum (2.4) des Retarders (2) aufweist, die in einer Vielzahl von vorgegebenen Schaufeln (2.7) ausgeführt sind, wobei je gebohrte Schaufel (2.7) mehrere Bohrungen (2.3) vorgesehen sind.

2. Kühlmitteikreistauf gemäß Anspruch 1, **dadurch gekennzeichnet, dass** im Kühlmittelkreislauf bei zugeschaltetem Retarder (2) In Strömungsrichtung vor dem Retarder (2) und hinter der Kühlmittelpumpe (1) ein zu kühlender Motor (5), insbesondere ein Verbrennungsmotor, angeordnet ist.

3. Kühlmittelkreislauf gemäß einem der Ansprüche 1 oder 2, **dadurch gekennzeichnet, dass** im Kühlmittelkreislauf bei zugeschaltetem Retarder (2) in Strömungsrichtung hinter dem Retarder (2) und vor der Kühlmittelpumpe (1) ein zu kühlender Motor (5), insbesondere Verbrennungsmotor, angeordnet ist.

4. Kühlmittelkreislauf gemäß einem der Ansprüche 1 bis 3, **dadurch gekennzeichnet, dass** der Retarder (2) ein Sekundärretarder ist.

5. Kühlmittelkreislauf gemäß einem der Ansprüche 1 bis 4, **dadurch gekennzeichnet dass** das Umschaltventil (3) als Drehschieberventil ausgebildet ist, welches
einen Einlass (3.1) und zwei Auslässe (3.2, 3.3) umfasst und
einen zylindrischen, um seine Längsachse drehbaren Ventilkolben (3.4) aufweist, welcher
eine Auslassbohrung (3.5) umfasst, die in Radialrichtung In den Ventilkolben (3.4) eingebracht ist und durch Drehen des Ventilkolbens mit jedem der Auslässe (3.2, 3.3) fluchtend ausrichtbar ist; und ferner
eine Einlassbohrung (3.6), welche in Radialrichtung in dem Ventilkolben (3.4) eingebracht und mit der Auslassbohrung (3.5) stromungsleitend verbunden ist, wobei
die Einlassbohrung (3.6) radial von außen nach innen konisch verjüngt ausgebildet ist, wobei die radial äußere Öffnungsfläche einen derart vergrößerten Durchmesser aufweist, dass sie ungeachtet der Ausrichtung der Auslassbohrung (3.5) mit einem Auslass (3.2, 3.3) ständig in strömungsleitender Verbindung mit dem Einlass (3.1) steht.

## Claims

1. A coolant circuit of a motor vehicle, comprising
1.1 a coolant;
1.2 a coolant pump (1) having a coolant outlet (1.1);
1.3 a retarder (2), which has a stator (2.2) and a core ring and whose working medium is the coolant, the core ring corresponding to the part of the working space (2.4) of the retarder (2) which is arranged behind a coolant-guiding retarder intake region in the flow direction of the coolant;
1.4 a changeover valve (3) in the flow direction before the retarder (2) and a bypass route (4) for bypassing the retarder (2), so that the retarder (2) is switchable in and out with respect to the coolant circuit; whereby
1.5 the coolant pump (1) is arranged in the flow direction before the retarder (2) in such a manner that it pumps coolant into the retarder (2) when the retarder (2) is switched in and it pumps coolant through the bypass route (4) past the retarder (2) when the retarder (2) is switched out, and whereby
1.6 the total flow resistance from the outlet (1.1) of the coolant pump (1) up to the core ring of the retarder (2) when the retarder is switched in is less than the cumulative flow resistance of the coolant circuit to be overcome by the coolant pump (1) in non-braking operation, in that
1.6.1 the coolant pump (1), the changeover valve (3), and the retarder (2) are arranged in direct succession in the flow direction in the mentioned sequence in the coolant circuit when the retarder is switched in, and/or
1.6.2 the stator (2.2) of the retarder (2) has bores (2.3) for supplying working medium into the working space (2.4) of the retarder (2) and is provided on its working medium intake side (2.5) over its entire circumference with ribs (2.6) for uniform distribution of the working medium over the stator circumference; and/or
1.6.3 the stator (2.2) of the retarder (2) has bores (2.3) for supplying the working medium into the working chamber (2.4) of the retarder (2), the bores (2.3) are conically tapered in the flow direction, and/or
1.6.4 the stator (2.2) of the retarder (2) has bores (2.3) for supplying the working medium into the working space (2.4) of the retarder (2), which are implemented in a plurality of predefined blades (2.7), whereby multiple bores (2.3) are provided per bored blade (2.7).

2. The coolant circuit according to Claim 1, **characterized in that** an engine (5) to be cooled, in particular an internal combustion engine, is arranged in the coolant circuit before the retarder (2) and after the coolant pump (1) in the flow direction when the retarder (2) is switched in.

3. The coolant circuit according to one of Claims 1 or 2, **characterized in that** an engine (5) to be cooled, in particular an internal combustion engine, is arranged in the coolant circuit after the retarder (2) and before the coolant pump (1) in the flow direction when the retarder (2) is switched in.

4. The coolant circuit according to one of Claims 1 to 3, **characterized in that** the retarder (2) is a secondary retarder.

5. The coolant circuit according to one of Claims 1 to 4, **characterized in that** the changeover valve (3) is implemented as a rotary slide valve, which comprises one inlet (3.1) and two outlets (3.2, 3.3) and
has a cylindrical valve piston (3.4) rotatable around its longitudinal axis, which
comprises an outlet bore (3.5), which is introduced in the radial direction into the valve piston (3.4) and can be aligned flush with each of the outlets (3.2, 3.3) by rotating the valve piston; and furthermore an inlet bore (3.6), which is introduced in the radial direction into the valve piston (3.4) and is connected to the outlet bore (3.5) to conduct flow, whereby
the inlet bore (3.6) is implemented as conically tapering radially from the outside to the inside, whereby the radial outer opening surface has such an enlarged diameter that it continuously has a flow-conducting connection to the inlet (3.1) despite the alignment of the outlet bore (3.5) with an outlet (3.2, 3.3).

## Revendications

1. Circuit de refroidissement d'un véhicule à moteur, comprenant
1.1 un liquide de refroidissement ;
1.2 une pompe à liquide de refroidissement (1) avec une sortie de liquide de refroidissement (1.1) ;
1.3 un retardateur (2), qui comprend un stator (2.2) et un noyau toroïdal et dont le fluide de travail est le liquide de refroidissement, le noyau toroïdal correspondant à la partie de l'espace de travail (2.4) du retardateur (2) qui est disposée, dans le sens d'écoulement du liquide de refroidissement, en aval d'une zone d'entrée du retardateur acheminant le liquide de refroidissement ;
1.4 une soupape de commutation (3) disposée dans le sens d'écoulement en amont du retardateur (2) et un trajet de dérivation (4) pour le contournement du retardateur (2), tel que le retardateur (2) puisse être mis en circuit et hors circuit par rapport au circuit de refroidissement ; dans lequel
1.5 la pompe à liquide de refroidissement (1) est disposée dans le sens d'écoulement en amont du retardateur (2), de telle façon que lorsque le retardateur (2) est en circuit, elle pompe du liquide de refroidissement dans le retardateur (2) et lorsque le retardateur (2) est hors circuit, elle pompe du liquide de refroidissement à travers le trajet de dérivation (4) en contournant le retardateur (2) ;
et dans lequel
1.6 la résistance totale à l'écoulement entre la sortie (1.1) de la pompe à liquide de refroidissement (1) et le noyau toroïdal du retardateur (2) est plus faible, quand le retardateur est en circuit, que la résistance à l'écoulement totale du circuit de refroidissement que la pompe à liquide de refroidissement (1) doit vaincre en mode sans freinage, par le fait que 1.6.1 la pompe à liquide de refroidissement (1), la soupape de commutation (3) et le retardateur (2) sont disposés immédiatement l'un derrière l'autre dans cet ordre dans le sens d'écoulement dans le circuit de refroidissement quand le retardateur est en circuit et/ou
1.6.2 le stator (2.2) du retardateur (2) présente des alésages (2.3) pour amener du fluide de travail dans l'espace de travail (2.4) du retardateur (2) et est pourvu sur son côté d'entrée du fluide de travail (2.5), sur toute sa circonférence, de nervures (2.6) destinées à répartir uniformément le fluide de travail sur la circonférence du stator ; et/ou
1.6.3 le stator (22) du retardateur (2) présente des alésages (2.3) pour amener le fluide de travail dans l'espace de travail (2.4) du retardateur (2), lesquels alésages (2.3) se resserrent en forme de cône dans le sens d'écoulement, et/ou
1.6.4 le stator (2.2) du retardateur (2) présente des alésages (2.3) pour amener le fluide de travail dans l'espace de travail (2.4) du retardateur (2), lesquels sont formés dans un grand nombre de pales (2.7) prédéterminées, plusieurs alésages (2.3) étant prévus dans chaque pale (2.7) percée.

2. Circuit de refroidissement selon la revendication 1, **caractérisé en ce qu'**il est prévu dans le circuit de refroidissement, en amont du retardateur (2) et en aval de la pompe à liquide de refroidissement (1) dans le sens d'écoulement quand le retardateur (2) est en circuit, un moteur (5) à refroidir, en particulier un moteur à combustion interne.

3. Circuit de refroidissement selon l'une des revendications 1 ou 2, **caractérisé en ce qu'**il est prévu dans le circuit de refroidissement, en aval du retardateur (2) et en amont de la pompe à liquide de refroidissement (1) dans le sens d'écoulement quand le retardateur (2) est en circuit, un moteur (5) à refroidir, en particulier un moteur à combustion interne.

4. Circuit de refroidissement selon l'une des revendications 1 à 3, **caractérisé en ce que** le retardateur (2) est un retardateur secondaire.

5. Circuit de refroidissement selon l'une des revendications 1 à 4, **caractérisé en ce que** la soupape de commutation (3) est réalisée comme une soupape à tiroir rotatif, qui
comprend une entrée (3.1) et deux sorties (3.2, 3.3) et
présente un piston de soupape (3.4) cylindrique capable de rotation autour de son axe longitudinal, qui
présente un alésage de sortie (3.5) qui est ménagé dans le sens radial dans le piston de soupape (3.4) et qui peut être orienté en alignement avec chacune des sorties (3.2, 3.3) par la rotation du piston de soupape ; et en outre
un alésage d'entrée (3.6) qui est ménagé dans le sens radial dans le piston de soupape (3.4) et qui communique de façon à conduire l'écoulement avec l'alésage de sortie (3.5),
l'alésage d'entrée (3.6) se resserrant en cône dans le sens radial de l'extérieur vers l'intérieur, la surface d'ouverture extérieure dans le sens radial présentant un diamètre agrandi de telle façon que quelle que soit l'orientation de l'alésage de sortie (3.5) par rapport à une sortie (3.2, 3.3), il se trouve toujours en communication avec l'entrée (3.1) de façon à conduire l'écoulement.
